# EUROPÄISCHE PATENTSCHRIFT

(11) **EP 0 793 840 B1**
(45) Veröffentlichungstag und Bekanntmachung des Hinweises auf die Patenterteilung: **07.06.2000**
(21) Anmeldenummer: 96932520.8
(22) Anmeldetag: 13.09.1996
(51) Int. Cl.: G09F 19/16, G02B 27/22

(54) **VORRICHTUNG ZUM DARSTELLEN SICH IM RAUM BEWEGENDER, FREI SCHWEBENDER BILDER**
DEVICE FOR DISPLAYING SPATIALLY MOVING, FREELY FLOATING IMAGES
DISPOSITIF DE PRESENTATION D'IMAGES FLOTTANT LIBREMENT ET MOBILES DANS L'ESPACE

(30) Priorität: 26.09.1995 DE 29515955 U
(43) Veröffentlichungstag der Anmeldung: 10.09.1997
(73) Patentinhaber: Maass, Uwe, 50996 Köln (DE)
(72) Erfinder: Maass, Uwe, 50996 Köln (DE)
(74) Vertreter: Lenzing, Andreas, Dr.
(86) Internationale Anmeldenummer: EP9604021
(87) Internationale Veröffentlichungsnummer: WO9712354

(56) Entgegenhaltungen:
- EP-A- 0 310 077
- US-A- 5 181 122

## Beschreibung

Die Erfindung betrifft eine Vorrichtung zum Darstellen sich im Raum bewegender, frei schwebender Bilder mit einem senkrecht stehenden Hohlzylinder mit mindestens einem in dessen Umfang angeordneten Sichtfenster, mit einer im Hohlzylinder auf der Höhe des Sichtfensters unter einem spitzen bis stumpfen Winkel gegenüber der Horizontalen verlaufenden spiegelnden und gleichzeitig transparenten Fläche und mit mindestens einem im Hohlzylinder angeordneten und auf die Fläche gerichteten Bildgeber.

Es gibt Anwendungen, bei denen dynamische Vorgänge oder sich bewegende Bilder dargestellt und sichtbar gemacht werden sollen. Solche Anwendungen gibt es in Museen, wenn es darum geht, den Besuchern den zeitlichen Ablauf eines geschichtlichen Ereignisses oder dergleichen vorzuführen. Anwendungen gibt es auch in der Wirtschaft bei der Vorstellung von Produkten, bei der Werbung und dergleichen. Schließlich gibt es auch Anwendungen, bei denen beide Ziele angestrebt werden. Zum Beispiel soll den Besuchern eines Kaufhauses oder Restaurants ein neues Produkt auf eine unterhaltsame und anziehende Weise vorgestellt werden.

Bekannt ist eine Vorrichtung der eingangs genannten Gattung (EP-A-0 310 077), die für solche Anwendungen auf Ausstellungen und in Museen und Schaufenstern bestimmt ist. Diese Vorrichtung macht von dem physikalischen Prinzip Gebrauch, das jeder Autofahrer an der Windschutzscheibe seines Fahrzeuges erlebt. Ein auf der Ablage vor der Windschutzscheibe liegender Gegenstand spiegelt sich in dieser so, daß er dem Autofahrer - in Fahrtrichtung gesehen - vor der Windschutzscheibe zu liegen scheint. Bei der bekannten Vorrichtung wird der darzustellende Gegenstand vom Bildgeber auf die spiegelnde und transparente Fläche geworfen, die der Windschutzscheibe entspricht, und er spiegelt sich dann in der transparenten glatten Fläche derart, daß er dem Betrachter hinter der Fläche zu liegen scheint. Der Gegenstand erscheint als virtuelles Bild. Der Betrachter erkennt nicht die Spiegelung an der Fläche. Er sieht nur den frei im Raum schwebenden Gegenstand.

Bei der bekannten Vorrichtung wird die spiegelnde und gleichzeitig transparente Fläche durch eine transparente und 15 bis 30 % reflektierende Scheibe, eine Glasscheibe, gebildet. Diese Glasscheibe ist verhältnismäßig schwer und zerbrechlich. In Kaufhäusern und Restaurants, in denen die Vorrichtung verwendet wird, herrscht ein rauher Betrieb. Die Vorrichtung wird von einem Aufstellort zu einem anderen getragen. Dabei kann sie fallen oder an eine Wand angestoßen werden. Hierbei kann die Scheibe zerbrechen. Die bekannte Vorrichtung weist weiter nur ein Sichtfenster oder genauer nur eine Betrachtungsstelle auf. Nur eine Person, sei es in einem Kaufhaus, Museum oder Restaurant, kann sich vor der Vorrichtung aufstellen und das virtuelle Bild betrachten.

Hiervon ausgehend liegt der Vorrichtung die Aufgabe zugrunde, eine Vorrichtung dieser Art so auszubilden, daß sie zwecks einfachen Transports leicht und bruchfest ist und nach ihrem Aufstellen mehr als einer Person die Betrachtung ermöglicht. Die Lösung für diese Aufgabe ergibt sich bei einer Vorrichtung der eingangs genannten Gattung nach der Erfindung dadurch, daß die spiegelnde und gleichzeitig transparente Fläche eine dünne, transparente, plane und eine glatte Oberfläche aufweisende Folie ist, zwei Sichtfenster sich gegenüberliegend im Umfang des Hohlzylinders angeordnet sind und ein Bildgeber über und ein Bildgeber unter der Folie angeordnet ist.

In der erfindungsgemäßen Vorrichtung ist die Folie glatt gespannt. Dann reflektiert sie ohne Verzerrungen. Das virtuelle Bild wird nicht verzerrt. Die Folie ist vorzugsweise ohne jegliche Einschlüsse. Weiter soll sie auf ihrer Vorder- und Rückseite sehr glatt sein. Weiter soll sie sehr dünn sein. Schließlich soll die Folie 30 bis 50 %, vorzugsweise 30 %, des auf sie auftreffenden Lichtes reflektieren. Eine solche Folie eignet sich besonders gut für die erfindungsgemäßen Zwecke. Das Fehlen von Einschlüssen und ihre glatte Vorder- und Rückseite führen zu sehr geringen und nicht merkbaren Verzerrungen. Dem gleichen Zweck dient, daß die Folie sehr dünn ist. Spiegelungen oder Reflexionen an ihrer Vorder- und Rückseite fallen damit zusammen. Die für die erfindungsgemäßen Zwecke verwendete Folie wird im allgemeinen in Diafilme weiterverarbeitet. Hierzu wird sie in das Format der Diafilme, Kleinbildfilme, aufgeschnitten.

Zwei Sichtfenster sind einander gegenüberliegend im Umfang des Hohlzylinders angeordnet, und ein Bildgeber befindet sich über und ein Bildgeber befindet sich unter der Folie. Vorzugsweise verläuft diese unter einem Winkel von 45° gegenüber der Horizontalen. Als Bildgeber wird vorzugsweise eine Bildröhre mit sehr hoher Auflösung verwendet. Diese kann von einem Rechner angesteuert werden. Bei geeigneter Software und/oder passender Programmierung ergeben sich vielfältige Darstellungsmöglichkeiten.

Im Vergleich mit der bekannten Vorrichtung ist die erfindungsgemäße Vorrichtung leichter und stoßfester. Wegen ihrer beiden Sichtfenster können sich mindestens zwei Personen auf beiden Seiten der Vorrichtung aufstellen und gleichzeitig das virtuelle Bild betrachten.

Wie schon erwähnt, kann die erfindungsgemäße Vorrichtung in Restaurants und Kaufhäusern aufgestellt werden. Zweckmäßig gibt man der Vorrichtung ein dem Geschmack der typischen Besucher angepaßtes Äußeres. Dadurch werden sie angelockt. Sie werden zur erfindungsgemäßen Vorrichtung gehen, vor den Sichtfenstern stehenbleiben und in die Vorrichtung schauen. Dann werden sie nicht nur durch die in der Vorrichtung sichtbaren virtuellen Bilder gefesselt, sondern sie werden auch über deren Entstehen nachdenken. Dies führt zu einer hohen Akzeptanz und damit einem hohen Werbewirkungsgrad der erfindungsgemäßen Vorrichtung.

Am Beispiel der in der Zeichnung schematisch dargestellten Ausführungsform wird diese nun weiter beschrieben.

In der Zeichnung ist:

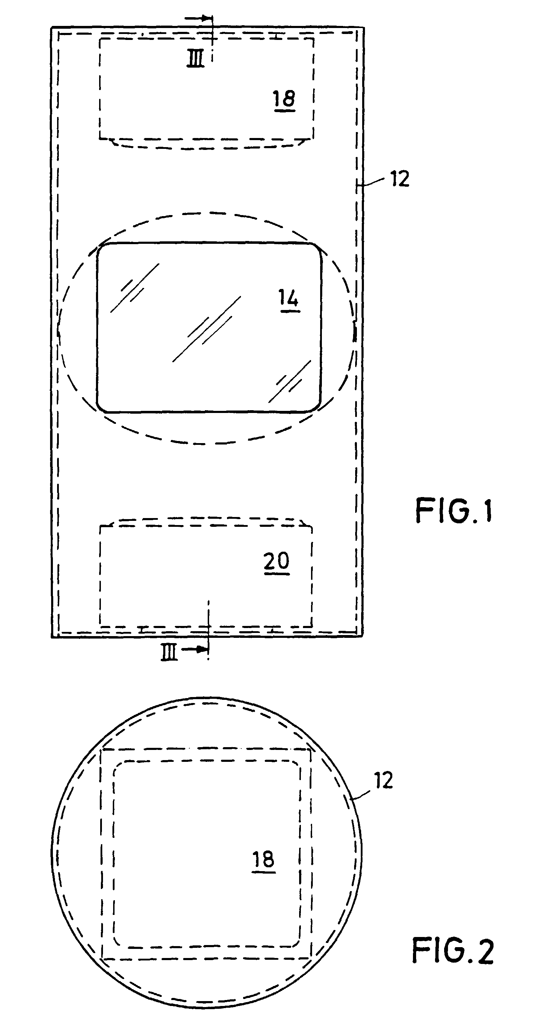

- Fig. 1: eine Seitenansicht der erfindungsgemäßen Vorrichtung,
- Fig. 2: eine Aufsicht und
- Fig. 3: ein Längsschnitt entlang der Schnittlinie III - III in Fig. 1.

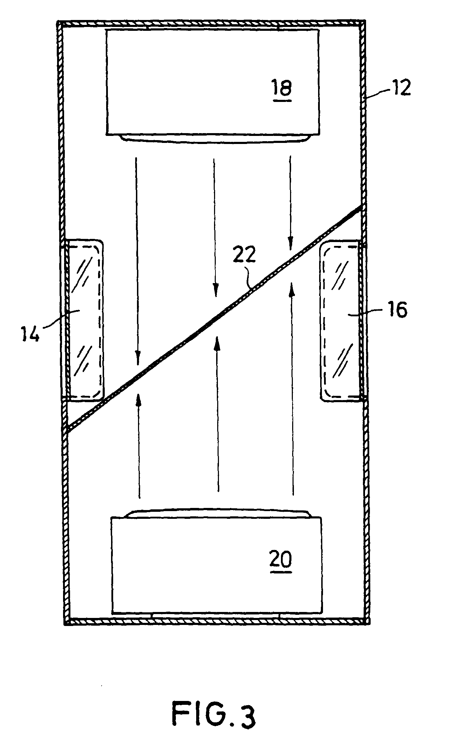

Die Figuren zeigen den Hohlzylinder 12 mit den beiden sich gegenüberliegenden Sichtfenstern 14 und 16, den beiden oben und unten angeordneten Bildgebern 18 und 20 und der zwischen den beiden Sichtfenstern 14 und 16 schräg verlaufenden und im Hohlzylinder 12 gehaltenen Folie 22. Diese wird von oben und unten, wie die in Fig. 3 eingezeichneten Pfeile andeuten, angestrahlt. Das vom Bildgeber 18 abgegebene Bild erscheint dem am Bildfenster 14 sitzenden Beobachter als virtuelles Bild hinter der Folie 22. Bei Blick auf Fig. 3 befindet sich dieses virtuelle Bild rechts von der Folie 22. Ein vor dem Bildfenster 16 sitzender Betrachter sieht das vom Bildgeber 20 abgegebene Bild ebenfalls hinter der Folie 22. Bei Blick auf Fig. 3 erscheint dieses virtuelle Bild links von der Folie 22.

Die beiden Bildgeber 18 und 20 können verschiedene Bilder ausstrahlen. Ein von Bildfenster zu Bildfenster wandernder Betrachter sieht damit zwei verschiedene Bilder, Bewegungsabläufe oder Filme. Umso mehr wird er über das Entstehen der Bilder nachdenken. Dies steigert die Anziehungskraft der erfindungsgemäßen Vorrichtung.

## Patentansprüche

1. Vorrichtung zum Darstellen sich im Raum bewegender, frei schwebender Bilder mit einem senkrecht stehenden Hohlzylinder (12) mit mindestens einem in dessen Umfang angeordneten Sichtfenster (14, 16), mit einer im Hohlzylinder (12) auf der Höhe des Sichtfensters (14, 16) unter einem spitzen bis stumpfen Winkel gegenüber der Horizontalen verlaufenden spiegelnden und gleichzeitig transparenten Fläche (22) und mit mindestens einem im Hohlzylinder (12) angeordneten und auf die Fläche (22) gerichteten Bildgeber (18, 20), dadurch gekennzeichnet, daß die spiegelnde und gleichzeitig transparente Fläche eine dünne, transparente, plane und eine glatte Oberfläche aufweisende Folie (22) ist, zwei Sichtfenster (14, 16) sich gegenüberliegend im Umfang des Hohlzylinders (12) angeordnet sind und ein Bildgeber (18) über und ein Bildgeber (20) unter der Folie (22) angeordnet ist.

2. Vorrichtung nach Anspruch 1, dadurch gekennzeichnet, daß die Folie (22) unter einem Winkel von 45° gegenüber der Horizontalen verläuft.

3. Vorrichtung nach Anspruch 1, dadurch gekennzeichnet, daß der Bildgeber (18, 20) eine Bildröhre mit sehr hoher Auflösung ist.

## Claims

1. Apparatus for representing freely floating images which move in space, with a perpendicularly disposed hollow cylinder (12) with at least one viewing window (14, 16) arranged in the periphery thereof, a reflecting and at the same time transparent surface (22) extending in the hollow cylinder (12) at the height of the viewing window (14, 16) at an acute to obtuse angle with respect to the horizontal, and at least one image generator (18, 20) which is arranged in the hollow cylinder (12) and which is directed on to the surface (22), characterised in that the reflecting and at the same time transparent surface is a thin, transparent, planar foil (22) having a smooth surface, two viewing windows (14, 16) are arranged in mutually opposite relationship in the periphery of the hollow cylinder (12) and an image generator (18) is arranged above and an image generator (20) is arranged below the foil (22).

2. Apparatus according to claim 1 characterised in that the foil (22) extends at an angle of 45° with respect to the horizontal.

3. Apparatus according to claim 1 characterised in that the image generator (18, 20) is a picture tube with a very high level of resolution.

## Revendications

1. Dispositif pour la représentation d'images qui se déplacent dans l'espace et flottent librement, comprenant un cylindre creux (12) situé verticalement avec du moins une fenêtre de vue (14, 16) disposée dans la circonférence de celui-ci, avec une surface (22) miroitante et en même temps transparente qui s'étend dans le cylindre creux (12) à la hauteur de la fenêtre de vue (14, 16) sous un angle aigu à obtus par rapport à la horizontale, et avec du moins un générateur d'image (18, 20) qui est disposé dans le cylindre creux (12) et est dirigé sur la surface (22), caractérisé par le fait que la surface miroitante et en même temps transparente est une feuille (22) mince, transparente, plane qui présente une surface lisse, que deux fenêtres de vue (14, 16) sont disposées en vis-à-vis dans la circonférence du cylindre creux (12) et qu'un générateur d'image (18) est disposé au-dessus et un générateur d'image (20) est disposé au-dessous de la feuille (22).

2. Dispositif selon la revendication 1, caractérisé par le fait qui la feuille (22) s'étend sous un angle de 45° par rapport à la horizontale.

3. Dispositif selon la revendication 1, caractérisé par le fait que le générateur d'image (18, 20) est un tube image à très haute résolution.
